# EUROPEAN PATENT SPECIFICATION

(11) **EP 2 857 332 B1**
(45) Date of publication and mention of the grant of the patent: **13.07.2016**
(21) Application number: 14187284.6
(22) Date of filing: 01.10.2014
(51) Int. Cl.: B65G 21/20, A01G 9/08, B65G 15/14, B65G 17/38, B65G 37/00

(54) **Placement device and placement cart for picking up and putting out a product**
Platzierungsvorrichtung und Platzierungswagen zum Aufnehmen und Herausgeben eines Produkts
Dispositif de placement et chariot de placement permettant de ramasser et de mettre en oeuvre un produit

(30) Priority: 01.10.2013 NL 2011535; 28.03.2014 NL 2012519
(43) Date of publication of application: 08.04.2015
(73) Proprietor: Ideaal B.V., 5961 JD Horst (NL)
(72) Inventor: Swinkels, Johannes Peter Hendrina, 5961 JD HORST (NL); Geurts, Peter Johannes Lodewijk, 5961 GT HORST (NL)
(74) Representative: Algemeen Octrooi- en Merkenbureau B.V.

(56) References cited:
- EP-A1- 2 055 655
- EP-A2- 1 647 180
- FR-A- 1 318 396
- NL-A- 9 402 104
- NL-C2- 1 020 409
- US-B1- 6 244 429

## Description

The invention relates to a conveying device according to the preamble of claim 1 for picking up and putting out a product. The invention further relates to a placement cart according to the preamble of claim 16 for picking up and putting out a product.

The invention relates to a placement device for picking up and putting out products, comprising a gutter formed by a pair of opposite guides, wherein the gutter is provided with conveying means for conveying the products along the gutter, wherein said pair of guides is provided at a first end with nose parts which make a common angle in the longitudinal direction with the respective guides, wherein said pair of guides is provided at an opposite second end with a driving mechanism for driving the conveying means in two directions. The application further relates to a placement cart for picking up and putting out products, comprising a chassis provided with a drive unit, a frame construction provided with at least one placement device for picking up and putting up products, and a control unit for controlling the drive unit and the conveying means of the at least one placement device.

A placement device and a placement cart according to the preambles of claims 1 and 16, are known from patent publication NL 1020409, which discloses a device for picking up plant pots, comprising a free upper frame provided with placement means which comprise at least one drivable transfer element for picking up a row of plant pots from the ground in the device whilst driving forward. In said device, each transfer element is over the entire length thereof made up of two product carriers arranged parallel to each other in an endless loop for picking up the products or pots from the ground surface. The placement means are configured as a gutter, in the upright sides of which the product carriers are accommodated. The gutter may have a U-shaped section. A problem that occurs when a gutter is used is that in the case of a variation in the width of the products, or flower pots, being supplied, the gutter would have to be exchanged for a gutter having a different width each time so as to be able to handle said variation.

From WO 2012/090079 A1, for example, there is known a conveying system comprising lateral guides that can be adjusted for width, wherein the width of the space between the lateral guides between which products are conveyed is adjustable at several locations along the lateral guides.

A drawback of guides that can be adjusted in this way is that in the case of a placement cart comprising a multitude of placement devices according to NL 1020409, which placement devices are mounted side by side on the placement cart, with an adjustable spacing between them, and which are adjustable for width as described in WO 2012/090079 A1, adjusting the width requires adjusting all lateral guides independently at several locations and, in addition, at different locations in the longitudinal direction. Accordingly it is an object of the invention to provide a placement device and a placement cart in which the above problems are eliminated.

According to the invention the at least one guide comprises a part that is flanged toward the inner side of the gutter and wherein the adjustable transmission is formed by a projection attached to the connecting part and a corresponding groove formed in the flanged part, which extends at an angle to the longitudinal direction of the flanged part, wherein the projection is received in the groove and the projection cooperates with the groove for converting the movement in the longitudinal direction of the connecting part into the movement perpendicular to the longitudinal direction of the guides.

In this way an alternative embodiment of the simple construction as described above is obtained. The same effect can be realised by exchanging the groove and the projection.

In another embodiment, a groove is provided in each guide, wherein the two grooves are arranged in a V-like shape relative to each other and the connecting part is provided with associated projections that cooperate with the grooves.

This, too, achieves that the two guides can move symmetrically relative to each other in the transverse direction of the gutter.

In the above embodiments, the grooves can be realised in a simple manner by means of a milling or punching operation.

In one embodiment, the adjusting mechanism is mounted to the guides at a second end opposite the first end of the pair of guides.

This achieves that the placement device is adjustable on one side. A driver or operator of a placement cart can now adjust the width of one or more placement devices mounted on his placement cart from the driver's position without having to leave his driver's position.

Said adjusting can be done by an operating element in the operating mechanism, which is connected to the connecting part, for adjusting the width of the gutter.

In another embodiment, the operating element is adapted for being connected to a central operating element for operating at least two placement devices.

Thus, placement devices can be adjusted simultaneously, making it possible to realise a considerable gain of time in readjusting widths.

The driving mechanism may furthermore be incorporated in the adjusting mechanism. In this way a compact construction of the connecting device is realised.

In one embodiment, the driving mechanism is adapted for receiving a common drive shaft for driving the driving mechanisms of at least two placement devices simultaneously.

This achieves that all conveying means of placement devices mounted on a placement cart will run synchronously.

In one embodiment, the conveying means are provided on a bottom of the gutter between the pair of guides.

In this way, products which can only be picked up on the bottom side can be picked up in the placement device and be put out again at another point in time. Varying the speed of the conveying means relative to a conveying speed relative to the ground surface on which the products are being placed makes it possible to vary the spacing in the conveying direction. In another embodiment, the conveying means comprise a conveyor belt provided between the guides.

In one embodiment, the conveying means comprise a first and a second carrier arranged in an endless loop in the first and the second guide, respectively, in a respective slot on a side of the respective guide that faces the inner side of the gutter.

In this way, products, for example flowerpots, which are to be picked up by an edge or a side, can be picked up in a placement device according to the invention and be put out again. A further advantage of this embodiment is that possible tilting or falling over of a product is prevented by engaging a product near an upper side.

In a further embodiment, the first and the second carrier comprise at least one projection provided along the product carrier for picking up and/or engaging a product.

This makes it possible to realise a better engagement by means of the first and the second product carrier. The grip can be improved by a suitable selection and position of the projection relative to the conveying direction. If the product carrier, being configured as a loop, has its projection facing outward, for example, it is possible to pick up products whose point of engagement is located below an upper edge of the product. If the projection of the product carrier faces the inner side of the gutter, however, a better engagement of products is obtained if they are clamped by means of a lateral force.

The object aimed at is also achieved by a placement cart for picking up and putting out a product, comprising a chassis provided with a drive unit for driving the placement cart, a frame construction provided with at least one placement device as described above and a control unit for controlling the drive unit and the conveying means of the at least one placement device.

The placement cart makes it possible to pick up a multitude of products or pots, transport them in one go and put them out again at another location with a desired spacing in longitudinal and transverse direction between them.

Furthermore, a carrier configured as a conveyor chain is disclosed, adapted for use in a placement device for picking up and putting out products according to the invention.

The conveyor chain for use in a placement device according to the invention comprises several enlarged links facing the inner side of the gutter of the placement device, which links are provided with the projection mounted along the carrier for picking up a product.

According to another aspect, the conveyor chain further comprises several links facing the outer side of the gutter, which are provided with link flanges facing away from each other for being accommodated in the slot in the side of the guide that faces the inner side of the gutter.

The conveyor chain further comprises several intermediate links.

### BRIEF DESCRIPTION OF THE DRAWINGS OF EMBODIMENTS

Figure 1 is a view of a placement device according to one embodiment of the invention;
Figure 2 is an exploded view of a first part of the placement device of figure 1, having an altenative adjustable transmission not forming part of the invention.
Figure 3 is a view of a second part of the placement device of figure 1;
Figure 4 is a detail view of a part of the placement device of figure 1;
Figure 5a is a view of a placement cart comprising a multitude of placement devices according to the invention;
Figure 5b is a side view of the placement cart of figure 5a;
Figures 6a-6d are detail views of a conveyor chain for use in a placement device according to the invention;
Figure 7 is a sectional view of a guide for use in a placement device according to the invention;
Figure 8 is a more detailed view of the guide for use in a placement device according to the invention.

### DETAILED DESCRIPTION OF EMBODIMENTS

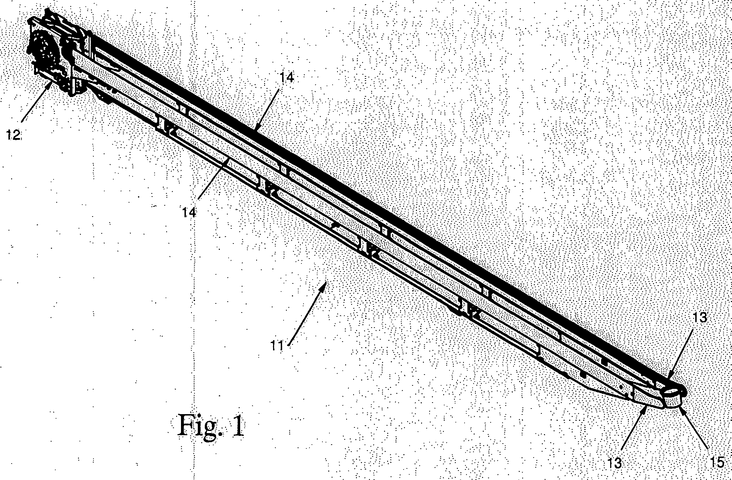

Figure 1 shows a placement device according to one embodiment of the invention. The placement device 11 comprises two side-by-side guides 14, to which nose parts 13 are connected at a first end and an adjusting mechanism 12 is connected at the other, opposite end. The nose parts may also be specially adapted ends of the guides 14. The adjusting mechanism 12 is disposed between the guides 14. On the inner side of the guides 14, a conveying mechanism (not shown in figure 1) is provided, which mechanism is suitable for picking up products 15, in particular flowerpots, which are picked up by the conveying mechanism between the guides in the placement device and put out again at another point in time. The picking up and putting out of products 15 preferably takes place with products which are disposed on a flat surface, such as a floor, and which must be picked up from time to time and be rearranged. This may for example take place at nurseries, where seedlings are put out in pots on a floor of a greenhouse, for example, in which the plants grow with the passage of time, so that the plants must be rearranged with a greater spacing between them. Another reason for picking up the pots is for example the fact that they must be transported to a processing step, such as the packaging of plants.

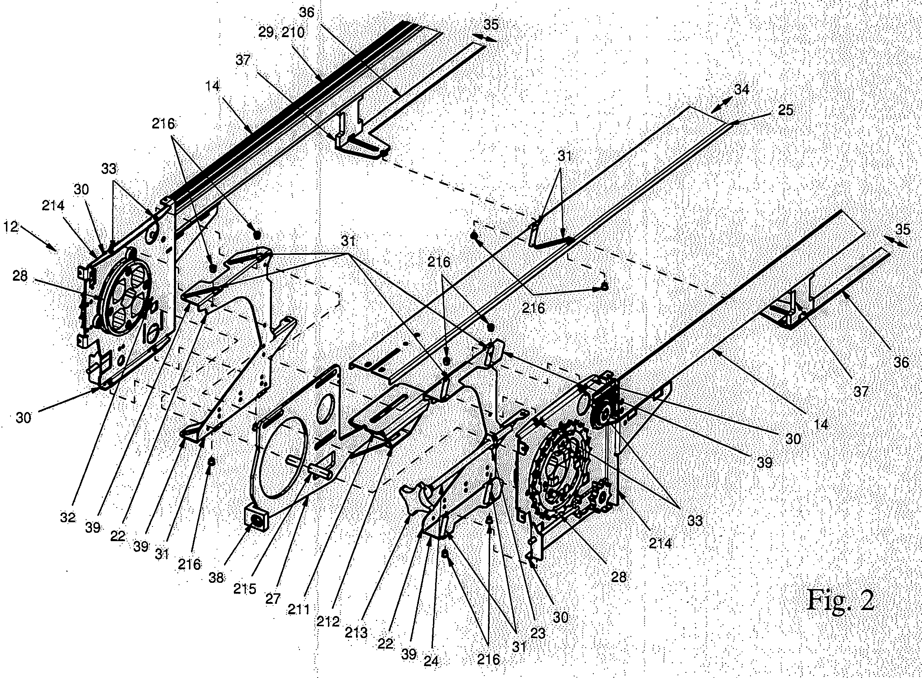

Figure 2 is an exploded view of the placement device with the adjusting mechanism 12 of figure 1. Figure 2 shows the guides 14 that are connected to side panels 214 of the adjusting mechanism. Furthermore there is shown a connecting plate 25, which is disposed between the guides 14. The connecting plate 25 is provided with V-shaped slots 31, which cooperate with projections 216 that are connected to upright parts 37 of the guides 14. The upright parts 37 may be connected, by means of a bottom part 36, to further upright parts 37, which may also be connected to the guides 14. The upper parts 36 have a strengthening function.

Figure 2 shows the placement device in an alternative embodiment not claimed thereof, in which the two guides 14 move in the transverse direction 35 relative to the longitudinal direction 34 of the placement device. In an alternative embodiment, a guide 14 could be fixedly mounted, with the opposite guide 14 being movable in the transverse direction 35 relative to the fixed guide 14. V-shaped slots are not necessary in that case, only slots 31 that extend obliquely outward on the movable side so as to convert a movement in the longitudinal direction 34 into a movement in the transverse direction 35.

In figure 2 there is further shown a frame part 27, which is connected to a mounting support 212. The mounting support 212 is used for connecting the placement device 11 to a placement cart, for example. The frame part 27 is immovable relative to the mounting support 212, therefore, in contrast to the connecting part 25, which is movable in the longitudinal direction 234 of the placement device 11. The connecting plate 25 moves over a support plate 211 of the mounting support. The side panels 214 as well as the guides 14 are movable in a direction perpendicular to the direction 34.

A guide pin 215 extending in both directions is mounted to the frame part 27, over which the guide pin the side panels 214 can move in the transverse direction 35 of the placement device relative to the frame part 27 via corresponding guide holes 37 in the side panels 214. The connecting part 25 is connected to two movable connecting plate driving parts 22, which are positioned on either side of the frame part 27. The whole of the connecting plate driving parts 22 and the connecting plate 25 is movable in the longitudinal direction 34 of the placement device 11 by means of a spindle 24. The spindle 24 has a spindle nut 23 connected to one of the connecting plate driving parts 22. In the mounted position, the spindle 24 further extends through the spindle bearing 38, which is connected to the frame part 27. The spindle shaft 24 is provided with a stop, so that the spindle shaft 24 is secured in the longitudinal direction relative to the spindle bearing 38. By adjusting the spindle 24, which is done by turning the control knob 213, the position of the connecting plate driving means 22, and thus the connecting plate 25, relative to the frame part 27 can be adjusted.

The connecting plate driving parts 22 are provided with upright parts 39, in which grooves 31 are furthermore provided, which grooves cooperate with projections 216 provided in upright parts 30 of the side panels 214. The side panels 214 as well as the guides 14 connected thereto are set moving in the transverse direction 35, perpendicular to the direction of movement 34 of the connecting plate 25, by the reciprocating movement of the connecting plate 25 and the interaction between the grooves 31 and the projections 216.

In figure 2, a driving wheel 28 is furthermore provided for each side panel 214, which driving wheel drives a product carrier 41 provided in each guide 14 via a transmission mechanism (not shown in figure 2). The product carrier 41 is disposed in gutters 29, 210, which are provided at different heights in the guides 14, thus forming an upper loop and a lower loop, respectively, for the product carrier 41. A central, asymmetrical shaft lead-through 26 in the driving wheels 28 makes it possible to have a common asymmetrical shaft extend through the driving wheels 28, by means of which both driving wheels 28 of the respective side panels 214 can be driven, whilst simultaneously said drive shaft can function as a common drive shaft for further placement devices 11, so that the driven product carriers 41 of the respective placement devices 11 can be driven at exactly the same speed and with the same relative positions.

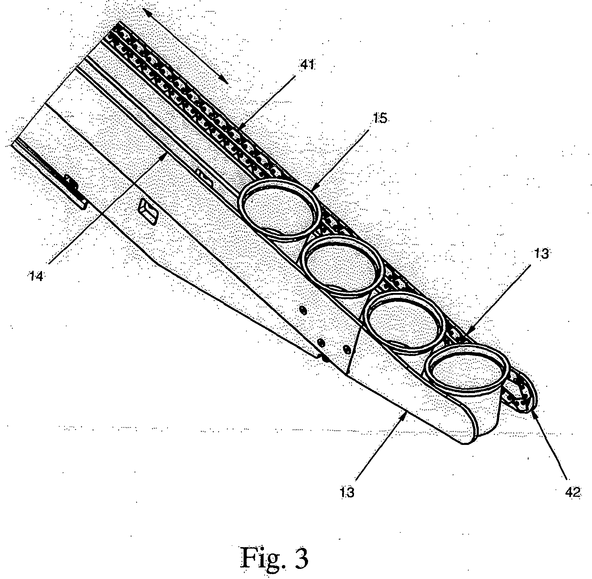

Figure 3 shows a second part of the placement device of figure 1. Nose parts 13 are provided at a lower end of the guides 14, which nose parts jointly form an opening for catching products, in this case flower pots 5, 15. The nose parts 13 can be formed by extending the guides 14. Using the product carrier 14, the products 15 can then be transported upward or downward along the guides 14, depending on the driving direction of the product carrier 41. The nose parts 13 include a turning point 42 for the product carrier 41, which makes it possible to configure the product carrier 41 as an endless loop, so that it can be driven at one point and continue without stopping. The product carrier 41 may be a conveyor chain, for example, or a belt or any other suitable carrier. The placement device 11 may also be provided with a conveyor belt (not shown) provided between the guides 14, for example on or above the bottom parts 37 of the guides 14 and/or between said guides 14.

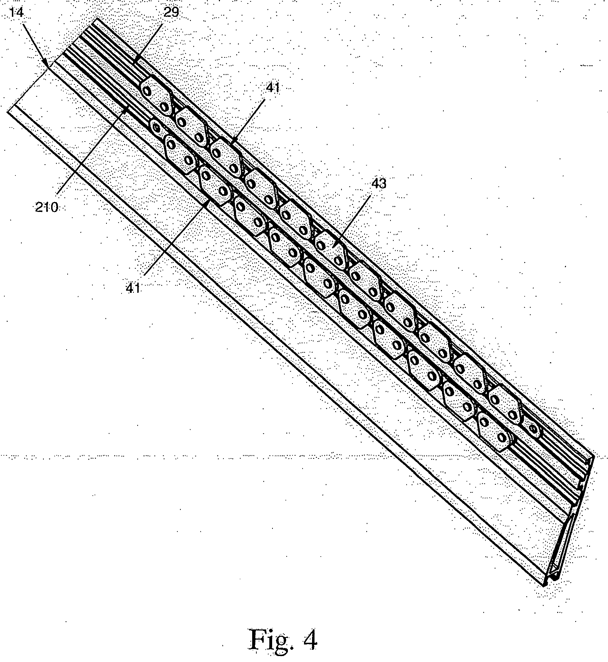

Figure 4 is a perspective view of a part of a guide 14, which shows the gutters which, together with the product carrier 41 provided therein, form the upper loop 29 and the lower loop 210, respectively. The product carrier 41 is formed by a conveyor chain comprising enlarged links 43 facing the inner side of the placement device, which function to engage a product 15, for example a plant or a flower pot. The gutters of the upper loop 29 and the lower loop 210 continue and blend together at the turning point 42 of each nose part 13.

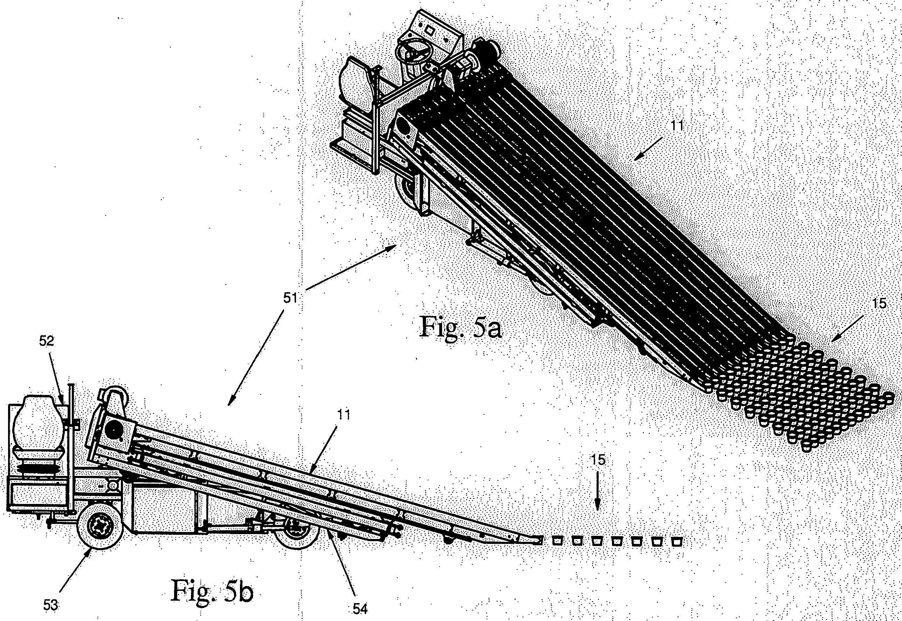

Figure 5a is a perspective view of a placement cart 51 for picking up and placing products 15, which placement cart is provided with a multitude of placement devices 11. The products 15 are disposed on a horizontal surface, for example a floor, and the placement cart 51 can be moved in such a manner that the products 15 can be picked up by the multitude of placement devices 11. The placement cart 51 may be designed to spread the placement devices 11, which are mounted on the placement cart 51 as separate units. In other words, the spacing between individual placement devices 11 may be adjustable. This can be realised, for example, by using a scissorlike frame. When products 15 are present in the placement devices 11, they can be put out on the floor again by the conveying mechanism incorporated in the placement devices 11, wherein the spacing between the products in the transverse direction of the placement cart 11 can be varied by varying the spacing between the placement devices 11, and wherein the spacing between the products 15 in the driving direction of the placement cart 51 can be varied by varying the driving speed of the placement cart 51.

Figure 5b is a side view of a placement cart 51 as shown in figure 5a. As figure 5b shows, the placement devices 11 are mounted on a frame construction 54. In this embodiment, varying the spacing in the transverse direction of the placement cart 51 between the placement devices 11 is realised by spreading means (not shown) provided on the frame construction 54 for that purpose, which spreading means can adjust the spacing between the placement devices 11 by means of a scissoring action. The frame construction 54 is mounted on a mobile chassis 53. The mobile chassis 53 may be configured as a drivable chassis by providing a control unit 52 which controls a drive unit in the mobile chassis 53. The control unit 52 may for example be designed to control the conveying speed of the products 15 in the placement device 11 such that said speed will be identical to the driving speed of the placement cart 51 during the putting out of products 15, so that the products 15 will not shift or fall over upon being put out. The spacing between products 15 can be varied by means of small variations in the conveying speed.

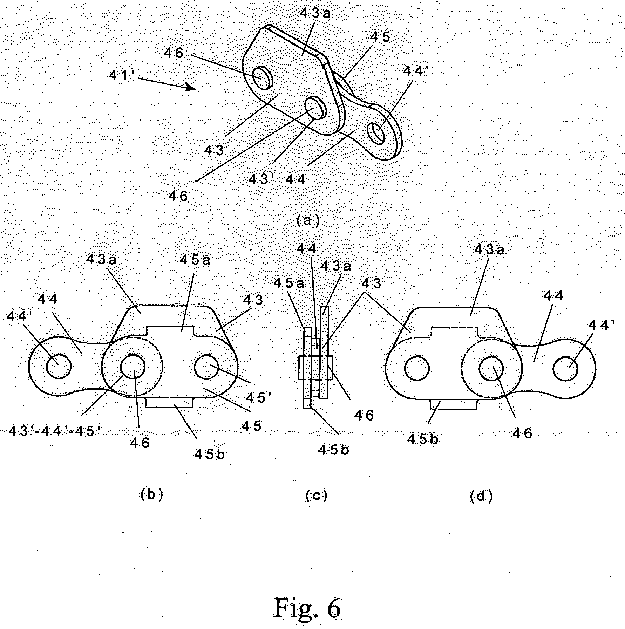

Figure 6 shows in several more detailed views 6a-6d a product carrier 41 for use in a guide 14 of a placement device 11 according to the invention.

In this embodiment, the product carrier 41 is configured as a conveyor chain built up of several riveted-together chain links 41'. Each chain-link 41' is built up of an enlarged link 43 facing the inner side of the gutter, an intermediate link 44 and a link 45 that faces the outer side of the gutter.

The enlarged link 43 is provided with a projecting link portion 40 3a for engaging a product 15, for example a plant or a flower pot. The enlarged link 43 is furthermore provided with link openings 43', which, with a view to assembling a chain link 41', coincide with corresponding link openings 44' and 45' of the cooperating intermediate link 44 and the link 45 facing the outer side of the gutter, respectively. A link pin 46 is present in the coinciding link openings 43'-44'-45'.

The link 45 that faces the outer side of the gutter is provided with link flanges 45a and 45b that face away from each other, the functionality of which ling flanges will be explained below.

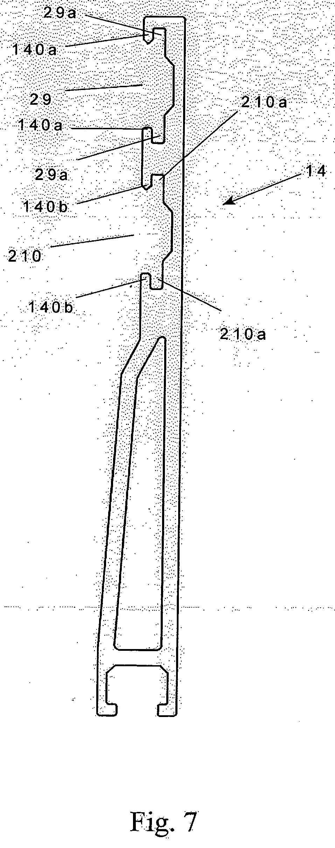

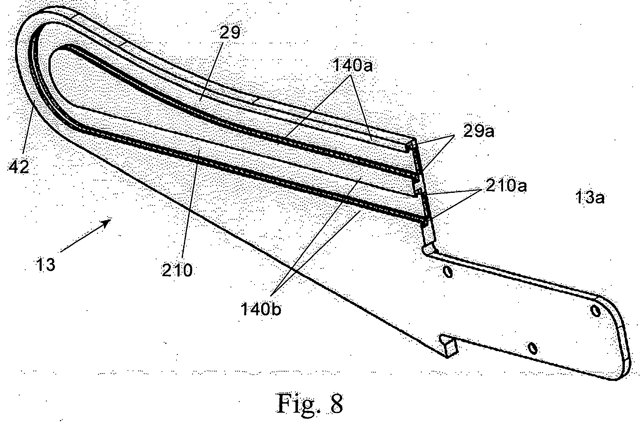

The functionality of the conveyor chain 41 of figure 6 is best shown in combination with figure 7, which is a more detailed sectional view of the guide 14. The guide 14 is preferably made by means of an aluminium section extrusion process and comprises two recessed slots or slot profiles indicated as the upper loop 29 and the lower loop 210. The slots of the lower loop 29 and the upper loop 210 blend together at the turning point 42 of each nose part 13 (see figure 5, but also the detail in figure 8) and are adapted to accommodate the conveyor chain 41 of figure 6.

As shown in figure 7, each slot profile 29 and 210 is provided with two retaining edges 140a and 140b, respectively, which retaining edges define slot recesses 29a and 210a, respectively. In the slot recesses 29a and 210a, the link flanges 45a and 45b, respectively, of the link 45 that faces the outer side of the gutter are received and retained, so that the conveyor chain 41 can be effectively moved along and in the slot profiles 29 and 210, respectively, by the driving wheel 28.

The guide 14 is made of a hardened material (metal), so that wear and damage to the guide 14 caused by the conveyor chain 41 are prevented. By retaining the link 45 that faces the outer side of the gutter and its link flanges 45a-45b behind the respective retaining edges 140a-140b and in the slot recesses 29a-210a, the conveyor chain 41 is prevented from becoming detached from the guide 14, making it possible to use a guide 14 of considerable length. The placement cart 51 can thus have a larger capacity.

Figure 8 is a more detailed view of the nose part 13 of figure 3 that is to be mounted to the guide 14. The nose part 13 is provided with a mounting flange 13a for being connected to the guide 14. The nose part 13 is provided with a turning point 42 for the product carrier 41, in particular the conveyor chain as shown in figures 4 and 6, making it possible to configure the product carrier 41 with an endless loop, so that it can be driven at one point and run continuously. In this case, too, the nose part 13 has slot profiles 29 and 210 provided with two retaining edges 140a and 140b, respectively, which retaining edges define slot recesses 29a and 210a, respectively. In the slot recesses 29a and 210a, the link flanges 45a and 45b, respectively, of the link 45 that faces the outer side of the gutter are received and retained, so that the conveyor chain 41 can be effectively moved along and in the slot profiles 29 and 210, respectively, by the driving wheel 28.

The embodiments described herein are merely intended as examples. Variations and modifications to these examples are possible without departing from the scope of the invention as defined in the appended claims.

### REFERENCE NUMERALS

- 11: placement device
- 12: adjusting mechanism
- 13: nose part
- 13a: mounting flange
- 14: guide
- 140a-140b: retaining edge
- 15: product
- 22: connecting plate
- 23: spindle nut
- 24: spindle
- 25: connecting plate guides
- 26: asymmetrical lead-through
- 27: frame part
- 28: conveyor driving wheel
- 29: gutter upper loop
- 210: gutter lower loop
- 29a-210a: section recess
- 211: support plate
- 212: mounting support
- 213: control knob
- 214: side panel
- 215: guide pin
- 216: projection
- 31: V-shaped groove
- 32: guide hole
- 33: mounting hole
- 34: movement in longitudinal direction
- 35: movement in transverse direction
- 36: bottom part
- 37: upright part
- 38: spindle bearing
- 41: product carrier/conveyor chain
- 41': chain link
- 42: turning point
- 43: enlarged link facing the inner side of the placement device
- 43a: link part
- 44: intermediate link
- 45: link facing the outer side of the placement device
- 45a-45b: link flange
- 43'-44'-45': link opening
- 46: link pin
- 51: placement cart
- 52: control unit
- 53: chassis
- 54: frame construction

## Claims

1. A placement device (11) for picking up and putting out products (15), comprising:
a gutter formed by a pair of opposite guides (14);
wherein the gutter is provided with conveying means for conveying the products along the gutter,
wherein each one of said pair of guides has a first end (13) adapted for picking up products;
wherein said pair of guides is provided with a driving mechanism for driving the conveying means in two directions;
the device (11) being **characterized in that** it comprises
a connecting part (25) that extends in a longitudinal direction relative to the guides (14) between the guides, which connecting part is movable in the longitudinal direction of the guides, wherein at least one adjustable transmission is provided between at least one of the guides (14) and the connecting part (25), which transmission is adapted to convert a movement in the longitudinal direction of the connecting part into a movement of the guides in a direction perpendicular to the longitudinal direction of the guides, such that the spacing between the guides will change as a result of the movement of the connecting part, wherein the at least one guide comprises a part (37) that is flanged toward the inner side of the gutter, and wherein the adjustable transmission is formed by a projection attached to the connecting part and a corresponding groove formed in the flanged part, which extends at an angle to the longitudinal direction of the flanged part, wherein the projection is received in the groove and the projection cooperates with the groove for converting the movement in the longitudinal direction of the connecting part into the movement perpendicular to the longitudinal direction of the guides.

2. A placement device according to claim 1, further comprising an adjusting mechanism (12) for effecting the movement of the connecting part in the longitudinal direction of the guides relative to the guides.

3. A placement device according to claim 1, wherein a groove is provided in each guide (14), wherein the two grooves are arranged in a V-like shape relative to each other and the connecting part (25) is provided with associated projections that cooperate with the grooves.

4. A placement device according to one or more of the preceding claims, wherein the adjusting mechanism (12) is attached to the guides at a second end opposite the first end.

5. A placement device according to claim 4, wherein the adjusting mechanism (12) comprises an operating element for adjusting the width of the gutter, which operating element is connected to the connecting part.

6. A placement device according to claim 5, wherein the operating element is adapted for being connected to a central operating element for operating at least two placement devices.

7. A placement device according to claim 6, wherein the driving mechanism (28) is incorporated in the adjusting mechanism.

8. A placement device according to claim 7, wherein the driving mechanism (28) is adapted for receiving a common drive shaft for driving the driving mechanisms of at least two placement devices simultaneously.

9. A placement device according to one or more of the preceding claims, wherein the conveying means are provided on a bottom of the gutter between the pair of guides.

10. A placement device according to claim 9, wherein the conveying means comprises a conveyor belt.

11. A placement device according to one or more of the preceding claims, wherein the conveying means comprise a first and a second carrier (41) arranged in an endless loop in the first and the second guide, respectively, in a respective slot on a side of the respective guide that faces the inner side of the gutter.

12. A placement device according to claim 11, wherein the first and the second carrier (41) comprise at least one projection provided along the product carrier for picking up a product.

13. A placement device according to claim 11 or 12, wherein the first and the second carrier (41) are configured as a conveyor chain comprising several enlarged links (43) facing the inner side of the gutter, which links are provided with the projection mounted along the carrier for picking up a product.

14. A placement device according to claim 13, wherein the conveyor chain further comprises several links (45) facing the outer side of the gutter, which are provided with link flanges facing away from each other for being accommodated in the slot in the side of the respective guide that faces the inner side of the gutter.

15. A placement device according to claim 14, wherein the conveyor chain further comprises several intermediate links (44).

16. A placement cart for picking up and putting out products, comprising a chassis (53) provided with a cart driving unit for moving the placement cart ahead, a frame construction (54) provided with at least one placement device (11) for picking up and putting out products, and a control unit (52) for controlling the driving unit and the conveying means of the at least one placement device, **characterised in that** the at least one placement device (11) is configured as defined in one or more of claims 1-15.

## Patentansprüche

1. Platzierungsvorrichtung (11) zum Aufnehmen und Herausgeben von Produkten (15), mit:
einer Rinne, die durch ein Paar einander gegenüberliegender Führungen (14) gebildet ist,
wobei die Rinne mit Fördereinrichtungen versehen ist, um die Produkte entlang der Rinne zu transportieren,
wobei jede Führung des Paars ein erstes Ende (13) hat, das zum Aufnehmen von Produkten geeignet ist,
wobei das Paar Führungen mit einem Antriebsmechanismus versehen ist, um die Fördereinrichtungen in zwei Richtungen anzutreiben,
wobei die Vorrichtung (11) **dadurch gekennzeichnet ist, dass** sie ein Verbindungsteil (25) umfasst, das sich zwischen den Führungen in eine Längsrichtung relativ zu den Führungen (14) erstreckt, wobei das Verbindungsteil in der Längsrichtung der Führungen beweglich ist, wobei wenigstens ein verstellbares Getriebe zwischen wenigstens einer der Führungen (14) und dem Verbindungsteil (25) vorgesehen ist, wobei das Getriebe geeignet ist, eine Bewegung in der Längsrichtung des Verbindungsteils so in eine Bewegung der Führungen in eine Richtung senkrecht zu der Längsrichtung der Führungen umzuwandeln, dass sich der Abstand zwischen den Führungen infolge der Bewegung des Verbindungsteils ändert, wobei die wenigstens eine Führung ein Teil (37) umfasst, das gegen die Innenseite der Rinne geflanscht ist, und wobei das verstellbare Getriebe durch einen am Verbindungsteil befestigten Vorsprung und eine entsprechende im angeflanschten Teil gebildete Rille, die sich in einem Winkel zu der Längsrichtung des angeflanschten Teils erstreckt, gebildet ist, wobei der Vorsprung in der Rille aufgenommen ist und der Vorsprung mit der Rille zusammenwirkt, um die Bewegung in der Längsrichtung des Verbindungsteils in die Bewegung senkrecht zu der Längsrichtung der Führungen umzuwandeln.

2. Platzierungsvorrichtung nach Anspruch 1, ferner mit einem Verstellmechanismus (12), um die Bewegung des Verbindungsteils in der Längsrichtung der Führungen relativ zu den Führungen zu bewirken.

3. Platzierungsvorrichtung nach Anspruch 1, wobei eine Rille in jeder Führung (14) vorgesehen ist, wobei die beiden Rillen in einer V-artigen Form relativ zueinander angeordnet sind und das Verbindungsteil (25) mit zugehörigen Vorsprüngen versehen ist, die mit den Rillen zusammenwirken.

4. Platzierungsvorrichtung nach einem oder mehreren der vorhergehenden Ansprüche, wobei der Verstellmechanismus (12) an einem zweiten, dem ersten Ende entgegengesetzten Ende an den Führungen befestigt ist.

5. Platzierungsvorrichtung nach Anspruch 4, wobei der Verstellmechanismus (12) ein Bedienelement umfasst, um die Breite der Rinne einzustellen, wobei das Bedienelement mit dem Verbindungsteil verbunden ist.

6. Platzierungsvorrichtung nach Anspruch 5, wobei das Bedienelement dazu geeignet ist, mit einem zentralen Bedienelement verbunden zu sein, um wenigstens zwei Platzierungsvorrichtungen zu bedienen.

7. Platzierungsvorrichtung nach Anspruch 6, wobei der Antriebsmechanismus (28) im Verstellmechanismus integriert ist.

8. Platzierungsvorrichtung nach Anspruch 7, wobei der Antriebsmechanismus (28) dazu geeignet ist, eine gemeinsame Antriebswelle aufzunehmen, um die Antriebsmechanismen von wenigstens zwei Platzierungsvorrichtungen gleichzeitig anzutreiben.

9. Platzierungsvorrichtung nach einem oder mehreren der vorhergehenden Ansprüche, wobei die Fördereinrichtungen an einem Boden der Rinne zwischen dem Paar Führungen vorgesehen sind.

10. Platzierungsvorrichtung nach Anspruch 9, wobei die Fördereinrichtungen ein Förderband umfassen.

11. Platzierungsvorrichtung nach einem oder mehreren der vorhergehenden Ansprüche, wobei die Fördereinrichtungen einen ersten und einen zweiten Mitnehmer (41) umfassen, die in einer Endlosschleife in der ersten bzw. der zweiten Führung in einer entsprechenden Aufnahme auf einer Seite der entsprechenden Führung angeordnet sind, die der Innenseite der Rinne zugewandt ist.

12. Platzierungsvorrichtung nach Anspruch 11, wobei der erste und der zweite Mitnehmer (41) zumindest einen längs des Produktmitnehmers vorgesehenen Vorsprung aufweisen, um ein Produkt aufzunehmen.

13. Platzierungsvorrichtung nach Anspruch 11 oder 12, wobei der erste und der zweite Mitnehmer (41) als Förderkette gestaltet sind, die mehrere vergrößerte, der Innenseite der Rinne zugewandte Glieder (43) umfasst, die mit dem Vorsprung versehen sind, der längs des Mitnehmers zum Aufnehmen eines Produkts angebracht ist.

14. Platzierungsvorrichtung nach Anspruch 13, wobei die Förderkette ferner mehrere der Außenseite der Rinne zugewandte Glieder (45) umfasst, die mit voneinander abgewandten Gliedflanschen versehen sind, um in der Aufnahme in der Seite der entsprechenden Führung aufgenommen zu werden, die der Innenseite der Rinne zugewandt ist.

15. Platzierungsvorrichtung nach Anspruch 14, wobei die Förderkette ferner mehrere Zwischenglieder (44) umfasst.

16. Platzierungswagen zum Aufnehmen und Herausgeben von Produkten, mit einem Fahrgestell (53), das mit einer Wagenantriebseinheit zum Vorwärtsbewegen des Platzierungswagens versehen ist, einer Rahmenkonstruktion (54), die mit wenigstens einer Platzierungsvorrichtung (11) zum Aufnehmen und Herausgeben von Produkten versehen ist, und einer Steuereinheit (52) zum Steuern der Antriebseinheit und der Fördereinrichtungen der wenigstens einen Platzierungsvorrichtung, **dadurch gekennzeichnet, dass** die wenigstens eine Platzierungsvorrichtung (11) wie in einem oder mehreren der Ansprüche 1-15 angegeben gestaltet ist.

## Revendications

1. Dispositif de placement (11) pour ramasser et disposer des produits (15), comprenant :
une gouttière formée par une paire de guides (14) opposés ;
dans lequel la gouttière est munie de moyens de transport pour transporter les produits le long de la gouttière,
dans lequel chacun de ladite paire de guides a une première extrémité (13) adaptée pour ramasser des produits ;
dans lequel ladite paire de guides est munie d'un mécanisme d'entraînement pour entraîner le moyen de transport dans deux directions ;
le dispositif (11) étant **caractérisé en ce qu'**il comprend
une partie de raccordement (25) qui s'étend dans une direction longitudinale par rapport aux guides (14) entre les guides, laquelle partie de raccordement est mobile dans la direction longitudinale des guides, où au moins une transmission réglable est prévue entre au moins l'un des guides (14) et la partie de raccordement (25), laquelle transmission est adaptée pour convertir un déplacement dans la direction longitudinale de la partie de raccordement en un déplacement des guides dans une direction perpendiculaire à la direction longitudinale des guides, de manière à ce que l'espacement entre les guides changera à la suite du déplacement de la partie de raccordement, où l'au moins un guide comprend une partie (37) qui est à bride vers le côté intérieur de la gouttière, et où la transmission réglable est formée par une saillie fixée à la partie de raccordement et une rainure correspondante formée dans la partie à bride, qui s'étend selon un angle par rapport à la direction longitudinale de la partie à bride, où la saillie est reçue dans la rainure et la saillie coopère avec la rainure pour convertir le déplacement dans la direction longitudinale de la partie de raccordement en déplacement perpendiculaire à la direction longitudinale des guides.

2. Dispositif de placement selon la revendication 1, comprenant en outre un mécanisme de réglage (12) pour effectuer le déplacement de la partie de raccordement dans la direction longitudinale des guides par rapport aux guides.

3. Dispositif de placement selon la revendication 1, dans lequel une rainure est prévue dans chaque guide (14), dans lequel les deux rainures sont agencées selon une forme en V l'une par rapport à l'autre et la partie de raccordement (25) est munie de saillies associées qui coopèrent avec les rainures.

4. Dispositif de placement selon l'une ou plusieurs des revendications précédentes, dans lequel le mécanisme de réglage (12) est fixé aux guides au niveau d'une deuxième extrémité opposée à la première extrémité.

5. Dispositif de placement selon la revendication 4, dans lequel le mécanisme de réglage (12) comprend un élément d'actionnement pour régler la largeur de la gouttière, lequel élément d'actionnement est relié à la partie de raccordement.

6. Dispositif de placement selon la revendication 5, dans lequel l'élément d'actionnement est adapté pour être relié à un élément d'actionnement central pour actionner au moins deux dispositifs de placement.

7. Dispositif de placement selon la revendication 6, dans lequel le mécanisme d'entraînement (28) est incorporé dans le mécanisme de réglage.

8. Dispositif de placement selon la revendication 7, dans lequel le mécanisme d'entraînement (28) est adapté pour recevoir un arbre d'entraînement commun pour entraîner simultanément les mécanismes d'entraînement d'au moins deux dispositifs de placement.

9. Dispositif de placement selon l'une ou plusieurs des revendications précédentes, dans lequel les moyens de transport sont prévus sur un fond de la gouttière entre la paire de guides.

10. Dispositif de placement selon la revendication 9, dans lequel le moyen de transport comprend une bande d'amenée.

11. Dispositif de placement selon l'une ou plusieurs des revendications précédentes, dans lequel les moyens de transport comprennent un premier et un deuxième support (41) agencés dans une boucle sans fin dans le premier et le deuxième guide, respectivement, dans une fente respective sur un côté du guide respectif qui fait face au côté intérieur de la gouttière.

12. Dispositif de placement selon la revendication 11, dans lequel le premier et le deuxième support (41) comprennent au moins une saillie prévue le long du support de produit pour ramasser un produit.

13. Dispositif de placement selon la revendication 11 ou 12, dans lequel le premier et le deuxième support (41) sont configurés sous forme de chaîne transporteuse comprenant plusieurs maillons agrandis (43) faisant face au côté intérieur de la gouttière, lesquels maillons sont munis de la saillie montée le long du support pour ramasser un produit.

14. Dispositif de placement selon la revendication 13, dans lequel la chaîne transporteuse comprend en outre plusieurs maillons (45) faisant face au côté extérieur de la gouttière, qui sont munis de brides de raccordement opposées les unes aux autres pour être logées dans la fente du côté du guide respectif qui fait face au côté intérieur de la gouttière.

15. Dispositif de placement selon la revendication 14, dans lequel la chaîne transporteuse comprend en outre plusieurs maillons intermédiaires (44).

16. Chariot de placement pour ramasser et disposer des produits, comprenant un châssis (53) muni d'une unité d'entraînement de chariot pour déplacer le chariot de placement vers l'avant, une structure de cadre (54) munie d'au moins un dispositif de placement (11) pour ramasser et disposer des produits, et une unité de commande (52) pour commander l'unité d'entraînement et le moyen de transport de l'au moins un dispositif de placement, **caractérisé en ce que** l'au moins un dispositif de placement (11) est configuré tel que défini dans l'une ou plusieurs des revendications 1 à 15.
